# EUROPEAN PATENT APPLICATION

(11) **EP 3 173 851 A1**
(43) Date of publication of application: **31.05.2017**
(21) Application number: 15833414.4
(22) Date of filing: 29.05.2015
(51) Int. Cl.: G02B 27/22, G02F 1/1333

(54) **STEREO IMAGING DEVICE, METHOD, DISPLAY AND TERMINAL**

(30) Priority: 21.08.2014 CN 201410416075
(71) Applicant: Huawei Technologies Co. Ltd., Shenzhen, Guangdong 518129 (CN); Cambridge Enterprise Limited, Cambridge, Cambridgeshire CB2 1TN (GB)
(72) Inventor: LI, Kun, Cambridgeshire CB3 0FA (GB); CHU, Daping, Cambridgeshire CB3 0FA (GB); ROBERTSON, Brian, Cambridgeshire CB3 0FA (GB); ZHOU, Jiong, Shenzhen Guangdong 518129 (CN)
(74) Representative: Körber, Martin Hans
(86) International application number: PCT/CN2015/080211
(87) International publication number: WO 2016/026338

(57) **Abstract**

A stereoscopic imaging apparatus and method, a display, and a terminal are disclosed. A stereoscopic imaging apparatus (100) includes: a display panel (110), including a pixel array and configured to display images; and at least two lens layers (120, 130), disposed in a position corresponding to the pixel array, and configured to alternately deflect, according to applied time-multiplexing electric fields, light rays of the images displayed by all pixels (111 to 116) in the pixel array to at least four different projection directions, where a deflection angle corresponding to the at least four different projection directions is a sum of deflection angles of all of the at least two lens layers (120, 130), so that multiple persons can simultaneously view a three-dimensional stereoscopic image.

## Description

This application claims priority to Chinese Patent Application No. 201410416075.8, filed with the Chinese Patent Office on August 21, 2014 and entitled "STEREOSCOPIC IMAGING APPARATUS AND METHOD, DISPLAY, AND TERMINAL", which is incorporated herein by reference in its entirety.

### TECHNICAL FIELD

The present invention relates to display technologies, and in particular, to a stereoscopic imaging apparatus and method, a display, and a terminal.

### BACKGROUND

Currently, an auto-stereoscopic (auto-stereoscopic) display is also referred to as a naked-eye two-view display, or a naked-eye three-dimensional display, or a binocular parallax stereoscopic display.

In an auto-stereoscopic display, a phase characteristic of electrically tunable liquid crystal may be used to implement a three-dimensional (Three Dimension, 3D) display technology. For example, the electrically tunable liquid crystal may be attached tightly against a screen of existing user equipment, and a liquid crystal lens array is formed by using the phase characteristic if the liquid crystal is powered on, to deflect a beam emergent from pixels of a display of the user equipment to left or right to implement naked-eye binocular parallax, so as to generate a stereoscopic effect in the eyes of an observer.

Currently, the naked-eye three-dimensional display technology implemented by using the phase characteristic of the electrically tunable liquid crystal can be used by only one observer.

### SUMMARY

Embodiments of the present invention provide a stereoscopic imaging apparatus and method, a display, and a terminal, so that multiple persons can simultaneously view a three-dimensional stereoscopic image.

According to a first aspect, a stereoscopic imaging apparatus is provided, including: a display panel, including a pixel array and configured to display images; and a lens component, including at least two lens layers, where the at least two lens layers are disposed in an overlapping manner in a position corresponding to the pixel array, and are configured to deflect, according to applied time-multiplexing electric fields, light rays of the images that are displayed by the pixel array and that pass through the lens component to different projection directions.

With reference to the first aspect, in a first possible implementation manner, the time-multiplexing electric fields applied to the at least two lens layers are alternately switched every preset time period.

With reference to the first aspect, in a second possible implementation manner, the time-multiplexing electric fields applied to the at least two lens layers are synchronously switched every preset time period.

With reference to the first aspect or the first or the second possible implementation manner, in a third possible implementation manner, the pixel array is specifically configured to display, in a time-division manner, images obtained by shooting from two shooting angles, to present a stereoscopic image in every two projection directions.

With reference to the first aspect or any one of the possible implementation manners, in a fourth possible implementation manner, the at least two lens layers are N lens layers, and the N lens layers are configured to alternately deflect, according to the applied time-multiplexing electric fields, the light rays of the images displayed by all pixels in the pixel array to 2^{N} different projection directions within 2^{N} preset time periods, where N is a positive integer greater than 1.

With reference to the first aspect or any one of the possible implementation manners, in a fifth possible implementation manner, the at least two lens layers include: a first lens layer and a second lens layer, where the first lens layer is disposed between the second lens layer and the pixel array, the first lens layer includes: a first lens array, a first electrode layer, and a second electrode layer, where the first electrode layer and the second electrode layer are separately disposed at two sides of the first lens array, and the first lens array is configured to alternately deflect, by a first angle according to an electric field formed by an applied time-multiplexing voltage configuration between the first electrode layer and the second electrode layer, the light rays of the images displayed by the pixels in the pixel array; and the second lens layer includes: a second lens array, a third electrode layer, and a fourth electrode layer, where the third electrode layer and the fourth electrode layer are separately disposed at two sides of the second lens array, and the second lens array is configured to alternately deflect, by a second angle according to an electric field formed by an applied time-multiplexing voltage configuration between the third electrode layer and the fourth electrode layer, light rays emergent from the first lens array, so that the light rays of the images displayed by the pixels in the pixel array are projected to four different projection directions.

With reference to the fifth possible implementation manner, in a sixth possible implementation manner, each first lens in the first lens array corresponds to two first electrodes in the first electrode layer, a resistive film connected between the two first electrodes, and a second electrode in the second electrode layer, where the two first electrodes are configured to receive two different voltages, and the second electrode is used as a common electrode and is configured to receive a reference voltage, so that the first lens generates a function of an off-axis lens under an action of an electric field formed by the two voltages received by the two first electrodes and the reference voltage received by the second electrode, and is configured to alternately deflect, by the first angle, a light ray emergent from a pixel corresponding to the first lens; and each second lens in the second lens array corresponds to two third electrodes in the third electrode layer, a resistive film connected between the two third electrodes, and a fourth electrode in the fourth electrode layer, where the two third electrodes are configured to receive two different voltages, and the fourth electrode is used as a common electrode and is configured to receive a reference voltage, so that the second lens generates a function of an off-axis lens under an action of an electric field formed by the two voltages received by the two third electrodes and the reference voltage received by the fourth electrode, and is configured to alternately deflect, by the second angle, a light ray emergent from a first lens corresponding to the second lens.

With reference to the sixth possible implementation manner, in a seventh possible implementation manner, each first lens and an adjacent first lens in the first lens array share a first electrode.

With reference to the seventh possible implementation manner, in an eighth possible implementation manner, a preset interval is maintained between a second electrode corresponding to the second lens in the second lens array and a second electrode corresponding to an adjacent second lens, where the first lens and the adjacent first lens in the first lens array in different voltage configurations separately deflect light rays emergent from two pixels corresponding to the first lens and the adjacent first lens toward opposite directions by the first angle, and two second lenses corresponding to the first lens and the adjacent first lens in a same voltage configuration deflect light rays emergent from the first lens and the adjacent first lens toward a same direction by the second angle.

With reference to the fifth possible implementation manner, in a ninth possible implementation manner, in a first time period, the first lens in the first lens array deflects, according to a first voltage configuration, a light ray of a first pixel corresponding to the first lens toward a first direction by the first angle, the adjacent first lens deflects, according to a second voltage configuration, a light ray of a second pixel corresponding to the adjacent first lens toward a second direction by the first angle, a second lens corresponding to the first lens deflects, according to a third voltage configuration, the light ray of the first pixel in the first direction toward a third direction by the second angle to a first projection direction, and a second lens corresponding to the adjacent first lens deflects, according to the third voltage configuration, the light ray of the second pixel in the second direction toward the third direction by the second angle to a second projection direction, where the first voltage configuration is different from the second voltage configuration, and the first direction and the second direction are opposite to each other;
in a second time period, the first lens in the first lens array deflects, according to the first voltage configuration, the light ray of the first pixel toward the first direction by the first angle, the adjacent first lens deflects, according to the second voltage configuration, the light ray of the second pixel toward the second direction by the first angle, the second lens corresponding to the first lens deflects, according to a fourth voltage configuration, the light ray of the first pixel in the first direction toward a fourth direction by the second angle to a third projection direction, and the second lens corresponding to the adjacent first lens deflects, according to the fourth voltage configuration, the light ray of the second pixel in the second direction toward the fourth direction by the second angle to a fourth projection direction, where the fourth voltage configuration is different from the third voltage configuration, and the fourth direction and the third direction are opposite to each other;
in a third time period, the first lens in the first lens array deflects, according to the second voltage configuration, the light ray of the first pixel toward the second direction by the first angle, the adjacent first lens deflects, according to the first voltage configuration, the light ray of the second pixel toward the first direction by the first angle, the second lens corresponding to the first lens deflects, according to the fourth voltage configuration, the light ray of the first pixel in the second direction toward the fourth direction by the second angle to the fourth projection direction, and the second lens corresponding to the adjacent first lens deflects, according to the fourth voltage configuration, the light ray of the second pixel in the first direction toward the fourth direction by the second angle to the third projection direction; and
in a fourth time period, the first lens in the first lens array deflects, according to the second voltage configuration, the light ray of the first pixel toward the second direction by the first angle, the adjacent first lens deflects, according to the first voltage configuration, the light ray of the second pixel toward the first direction by the first angle, the second lens corresponding to the first lens deflects, according to the third voltage configuration, the light ray of the first pixel in the second direction toward the third direction by the second angle to the second projection direction, and the second lens corresponding to the adjacent first lens deflects, according to the third voltage configuration, the light ray of the second pixel in the first direction toward the third direction by the second angle to the first projection direction.

With reference to any one of the fifth to the ninth possible implementation manners, in a tenth possible implementation manner, the stereoscopic imaging apparatus further includes: a transparent substrate, disposed between the first lens layer and the second lens layer, where the second electrode layer is disposed at a side of the transparent substrate close to the first lens layer, and the fourth electrode layer is disposed at a side of the transparent substrate close to the second lens layer.

With reference to any one of the fifth to the tenth possible implementation manners, in an eleventh possible implementation manner, the first angle is 18°, and the second angle is 5°.

With reference to any one of the fifth to the eleventh possible implementation manners, in a twelfth possible implementation manner, the second electrode layer and the fourth electrode layer include a continuous indium tin oxide ITO transparent conductive film.

With reference to any one of the fifth to the twelfth possible implementation manners, in a thirteenth possible implementation manner, the first lens and the second lens include liquid crystal or lithium niobate crystal.

With reference to the first aspect or any one of the possible implementation manners, in a fourteenth possible implementation manner, if an electric field is applied to one of the N lens layers, the light rays of the images displayed by all the pixels in the pixel array are alternately deflected to two different projection directions.

With reference to the first aspect or any one of the possible implementation manners, in a fifteenth possible implementation manner, if no electric field is applied to the at least two lens layers, the display panel presents a two-dimensional image.

According to a second aspect, a display is provided, including: the stereoscopic imaging apparatus according to the first aspect or any one of the first to the thirteenth possible implementation manners of the first aspect; a backlight layer, overlapped with at least two lens layers of the stereoscopic imaging apparatus, and configured to emit backlight; and a control module, configured to control a display panel of the stereoscopic imaging apparatus to display images in a time-division manner, and control, according to applied time-multiplexing electric fields, the at least two lens layers of the stereoscopic imaging apparatus to alternately deflect light rays of the images displayed by the display panel to different projection directions.

With reference to the second aspect, in a first possible implementation manner of the second aspect, the control module further includes: a direction calculation submodule, configured to calculate a projection direction of the image according to information fed back by a sensor; a voltage calculation submodule, configured to calculate, according to the projection direction, a voltage configuration corresponding to the projection direction; a display control submodule, configure to control, according to the projection direction, the display panel of the stereoscopic imaging apparatus to display images; and a voltage control submodule, configured to control an electro-optic modulation layer of the stereoscopic imaging apparatus according to a time-multiplexing electric field applied by the voltage configuration, to control a lens layer of the stereoscopic imaging apparatus to alternately deflect light rays of the images to different projection directions.

With reference to the first possible implementation manner of the second aspect, in a second possible implementation manner of the second aspect, information fed back by the sensor includes at least one of human eye position information, gyroscope information, acceleration information, or temperature information.

According to a third aspect, a terminal is provided, including: the stereoscopic imaging apparatus according to the first aspect or any one of the first to the fifteenth possible implementation manners of the first aspect or the display according to the second aspect or the first or the second possible implementation manner of the second aspect.

According to a fourth aspect, a stereoscopic imaging method is provided, where the stereoscopic imaging method is applied to the stereoscopic imaging apparatus according to the first aspect or any one of the first to the fifteenth possible implementation manners of the first aspect, and includes: displaying images in a pixel array; applying time-multiplexing electric fields to at least two lens layers; and deflecting, according to the time-multiplexing electric fields, light rays of the images displayed by the pixel array to different projection directions.

With reference to the fourth aspect, in a first possible implementation manner of the fourth aspect, the applying time-multiplexing electric fields to at least two lens layers includes: alternately switching, every preset time period, the time-multiplexing electric fields applied to any two of the at least two lens layers.

With reference to the first possible implementation manner of the fourth aspect, in a second possible implementation manner of the fourth aspect, the applying time-multiplexing electric fields to at least two lens layers includes: synchronously switching, every preset time period, the time-multiplexing electric fields applied to the at least two lens layers.

With reference to the fourth aspect or the first or the second possible implementation manner of the fourth aspect, in a third possible implementation manner of the fourth aspect, the displaying images in a pixel array includes: displaying, in a time-division manner, images obtained by shooting from two shooting angles in the pixel array, to present a stereoscopic image in every two projection directions.

With reference to the fourth aspect or the first or the second or the third possible implementation manner of the fourth aspect, in a fourth possible implementation manner of the fourth aspect, the at least two lens layers are N lens layers, and the light rays of the images displayed by all pixels in the pixel array are alternately deflected to 2^{N} different projection directions within 2^{N} preset time periods according to the time-multiplexing electric fields, where N is a positive integer greater than 1.

With reference to the fourth aspect or any one of the first to the fourth possible implementation manners of the fourth aspect, in a fifth possible implementation manner of the fourth aspect, the at least two lens layers include a first lens layer and a second lens layer, and the applying time-multiplexing electric fields to at least two lens layers includes: receiving a time-multiplexing voltage configuration between a first electrode layer and a second electrode layer in the first lens layer to form an electric field, and alternately deflecting, by a first angle, the light rays of the images displayed by the pixels in the pixel array; and receiving a time-multiplexing voltage configuration between a third electrode layer and a fourth electrode layer in the second lens layer to form an electric field, and alternately deflecting light rays emergent from the first lens layer by a second angle, so that the light rays of the images displayed by the pixels in the pixel array are projected to four different projection directions.

With reference to the fifth possible implementation manner of the fourth aspect, in a sixth possible implementation manner of the fourth aspect, the receiving a time-multiplexing voltage configuration between a first electrode layer and a second electrode layer in the first lens layer to form an electric field includes:
receiving two different voltages by two first electrodes that correspond to each first lens in the first lens array of the first lens layer and that are connected to a resistive film, and receiving a reference voltage in a second electrode corresponding to the first lens, so that the first lens generates a function of an off-axis lens under an action of an electric field formed by the two voltages received by the two first electrodes and the reference voltage received by the second electrode, and is configured to alternately deflect, by the first angle, a light ray emergent from a pixel corresponding to the first lens; and
the receiving a time-multiplexing voltage configuration between a third electrode layer and a fourth electrode layer in the second lens layer to form an electric field includes:
   receiving two different voltages by two third electrodes that correspond to each second lens in the second lens array of the second lens layer and that are connected to a resistive film, and receiving a reference voltage in a fourth electrode corresponding to the second lens, so that the second lens generates a function of an off-axis lens under an action of an electric field formed by the two voltages received by the two third electrodes and the reference voltage received by the fourth electrode, and is configured to alternately deflect, by the second angle, a light ray emergent from a first lens corresponding to the second lens.

With reference to the sixth possible implementation manner of the fourth aspect, in a seventh possible implementation manner of the fourth aspect, the alternately deflecting, according to the time-multiplexing electric fields, light rays of the images displayed by all the pixels in the pixel array to at least four different projection directions includes:
in a first time period, deflecting, by the first lens in the first lens array according to a first voltage configuration, a light ray of a first pixel corresponding to the first lens toward a first direction by the first angle, deflecting, by an adjacent first lens according to a second voltage configuration, a light ray of a second pixel corresponding to the adjacent first lens toward a second direction by the first angle, deflecting, by a second lens corresponding to the first lens according to a third voltage configuration, the light ray of the first pixel in the first direction toward a third direction by the second angle to a first projection direction, and deflecting, by a second lens corresponding to the adjacent first lens according to the third voltage configuration, the light ray of the second pixel in the second direction toward the third direction by the second angle to a second projection direction, where the first voltage configuration is different from the second voltage configuration, and the first direction and the second direction are opposite to each other;
in a second time period, deflecting, by the first lens in the first lens array according to the first voltage configuration, the light ray of the first pixel toward the first direction by the first angle, deflecting, by the adjacent first lens according to the second voltage configuration, the light ray of the second pixel toward the second direction by the first angle, deflecting, by the second lens corresponding to the first lens according to a fourth voltage configuration, the light ray of the first pixel in the first direction toward a fourth direction by the second angle to a third projection direction, and deflecting, by the second lens corresponding to the adjacent first lens according to the fourth voltage configuration, the light ray of the second pixel in the second direction toward the fourth direction by the second angle to a fourth projection direction, where the fourth voltage configuration is different from the third voltage configuration, and the fourth direction and the third direction are opposite to each other;
in a third time period, deflecting, by the first lens in the first lens array according to the second voltage configuration, the light ray of the first pixel toward the second direction by the first angle, deflecting, by the adjacent first lens according to the first voltage configuration, the light ray of the second pixel toward the first direction by the first angle, deflecting, by the second lens corresponding to the first lens according to the fourth voltage configuration, the light ray of the first pixel in the second direction toward the fourth direction by the second angle to the fourth projection direction, and deflecting, by the second lens corresponding to the adjacent first lens according to the fourth voltage configuration, the light ray of the second pixel in the first direction toward the fourth direction by the second angle to the third projection direction; and
in a fourth time period, deflecting, by the first lens in the first lens array according to the second voltage configuration, the light ray of the first pixel toward the second direction by the first angle, deflecting, by the adjacent first lens according to the first voltage configuration, the light ray of the second pixel toward the first direction by the first angle, deflecting, by the second lens corresponding to the first lens according to the third voltage configuration, the light ray of the first pixel in the second direction toward the third direction by the second angle to the second projection direction, and deflecting, by the second lens corresponding to the adjacent first lens according to the third voltage configuration, the light ray of the second pixel in the first direction toward the third direction by the second angle to the first projection direction.

According to the technical solutions of the embodiments of the present invention, at least two lens layers are disposed, and are configured to deflect, according to applied time-multiplexing electric fields, light rays emergent from all pixels in a pixel array to at least four different projection directions, so that multiple persons can simultaneously view a three-dimensional stereoscopic image.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of a stereoscopic imaging apparatus according to an embodiment of the present invention;
FIG. 2 is a space principle diagram of two-person naked-eye 3D display according to an embodiment of the present invention;
FIG. 3(a), FIG. 3(b), FIG. 3(c), and FIG. 3(d) are schematic structural diagrams of a stereoscopic imaging apparatus according to another embodiment of the present invention;
FIG. 4 is a schematic structural diagram of a stereoscopic imaging apparatus according to another embodiment of the present invention;
FIG. 5 is a schematic structural diagram of a stereoscopic imaging apparatus according to another embodiment of the present invention;
FIG. 6 is a schematic structural diagram of a stereoscopic imaging apparatus according to another embodiment of the present invention;
FIG. 7 is a schematic structural diagram of a display according to an embodiment of the present invention; and
FIG. 8 is a schematic flowchart of a stereoscopic imaging method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In the embodiments of the present invention, stereoscopic imaging may refer to three-dimensional display or auto-stereoscopic display.

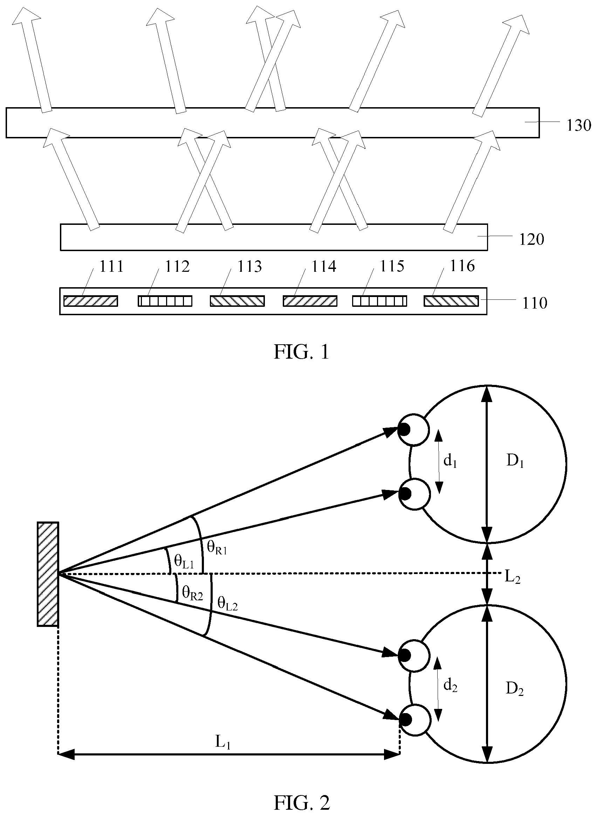

FIG. 1 is a schematic structural diagram of a stereoscopic imaging apparatus 100 according to an embodiment of the present invention. The stereoscopic imaging apparatus 100 includes: a display panel 110 and a lens component, where the lens component includes at least two lens layers. It should be understood that, for ease of description, FIG. 1 shows only two lens layers 120 and 130.

The display panel 110 includes a pixel array, configured to display images.

For example, the pixel array may include multiple pixels 111 to 116. For example, the pixel may be a monochrome pixel, a red pixel, a green pixel, or a blue pixel, and this embodiment of the present invention is not limited thereto, or the pixel may be an RGB pixel. The display panel 110 may display the images in a time-division manner. For example, images of a same scenario that is shot from two different shooting angles may be displayed in the time-division manner.

The two lens layers 120 and 130 are disposed in an overlapping manner in a position corresponding to the pixel array, and are configured to deflect, according to applied time-multiplexing electric fields, light rays of the images that are displayed by the pixel array and that pass through the lens component to different projection directions.

For example, by controlling a switching time of the time-multiplexing electric fields applied to the at least two lens layers and a switching time of the images of the same scenario that is shot from the two different shooting angles and that are displayed by the pixel array in the time-division manner, the light rays of the images displayed by the pixel array are alternately deflected to different projection directions, to present a stereoscopic image in every two projection directions corresponding to each observer. The different projection directions correspond to a left-eye observation direction and a right-eye observation direction of at least two observers. Because human eyes have a time period of visual persistence, as long as the light rays of the images displayed by all pixels in the display panel are deflected to multiple observation directions within the time period of visual persistence of the human eyes, the stereoscopic image viewed by naked eyes of multiple persons may be generated.

The at least two lens layers may be directly disposed above the pixel array, or disposed in a position in which multiple pixels are completely covered or coated. For example, an interval (space) /or a spacer (a filler, a spacer plate, an insulation plate, or the like) is between the pixel array and a lens layer.

The lens layer may be made of liquid crystal (liquid crystal, LC for short). After an electric field is applied to the liquid crystal, a refractive index of the liquid crystal can change, and different electric fields may correspond to different refractive indexes, that is, an electrically tunable prism array is formed in the lens layer by using the liquid crystal. When a light ray passes through the liquid crystal to which the electric field is applied, a phase offset of the emergent light ray changes as the applied electric field changes. This embodiment of the present invention is not limited thereto, and the lens layer may be made of another crystalline material whose refractive index can change when the electric field is applied to the crystalline material, for example, may be made of lithium niobate crystal.

In this embodiment of the present invention, at least two lens layers are disposed, and are configured to deflect, according to applied time-multiplexing electric fields, light rays of the images displayed by a pixel array to different projection directions, so that multiple persons can simultaneously view a three-dimensional stereoscopic image.

According to this embodiment of the present invention, the pixel array is specifically configured to display, in the time-division manner, images obtained by shooting from two shooting angles, to present a stereoscopic image in every two projection directions.

For example, the stereoscopic image is presented in every two projection directions corresponding to each observer.

In order that a resolution of the stereoscopic image presented by the stereoscopic imaging apparatus 100 is all pixel units, the electric field applied to the lens layer needs to meet a requirement in which light rays of images displayed by all pixels are deflected to multiple different projection directions within a time period of visual persistence. The time-division manner in which the display panel 110 displays the images obtained by shooting from different shooting angles should correspond to the time-multiplexing electric fields applied to the at least two lens layers, so that the two eyes of each of multiple observers separately view, within the time period of the visual persistence, the images of the same scenario shot from the two shooting angles that are displayed by all pixels in the display panel, that is, a high-resolution three-dimensional stereoscopic image may be observed by multiple persons in different observation directions.

According to this embodiment of the present invention, the at least two lens layers may be N lens layers, where the N lens layers are configured to alternately deflect, according to the applied time-multiplexing electric fields, the light rays of the images displayed by all the pixels in the pixel array to 2^{N} different projection directions within 2^{N} preset time periods, where N is a positive integer greater than 1.

According to this embodiment of the present invention, the time-multiplexing electric fields applied to the at least two lens layers may be synchronously switched every preset time period. In other words, the electric fields applied to the at least two lens layers are simultaneously switched every preset time period.

According to this embodiment of the present invention, the time-multiplexing electric fields applied to the at least two lens layers may be alternately switched every preset time period. In this way, a switching period of a time-multiplexing electric field applied to each lens layer is at least two preset time periods, so that a switching frequency of the time-multiplexing electric field applied to each lens layer may be reduced, making implementation easier, and prolonging a service life of a lens layer.

For example, at a time t₁, an electric field applied to a first lens layer is switched, electric fields applied to the rest N-1 lens layers keep unchanged; at a time t₂ after a preset time period, an electric field applied to an m^{th} lens layer is switched, and electric fields applied to the rest N-1 lens layers keep unchanged, where the m^{th} lens layer is any one of the N lens layers except the first lens layer.

In a technology in which a phase characteristic of electrically tunable liquid crystal is used to implement 3D display, in a viewable angle range, an electrically tunable liquid crystal lens may guide a beam to any angle. To achieve a minimum deflection angle of the beam when a single observer uses the 3D display, a relatively thick liquid crystal layer is needed. To meet a requirement in which multiple observers use the 3D display simultaneously, the minimum deflection angle of the beam needs to be increased, which needs a relatively thick LC layer. Because a switching speed of an LC lens is inversely proportional to square of a thickness of the LC lens, the relatively thick LC layer means that the switching speed is relatively slow. For example, an observation experience of a high quality naked-eye 3D effect is shared by two observers, and a display refresh rate is reduced by half because the switching speed of the LC lens is limited. In this way, quality of a video stream is reduced.

According to the stereoscopic imaging apparatus of this embodiment of the present invention, a light ray can be projected to at least two observers in a time sequence manner by using at least two lens layers, and a switching speed of an LC lens is not reduced.

It should be understood that, the stereoscopic imaging apparatus 100 may further include a control module, configured to control the two lens layers 120 and 130, according to the applied time-multiplexing electric fields, to alternately deflect the light rays of the images displayed by the pixel array to at least four different projection directions.

In the technical solution of this embodiment of the present invention, in order that a resolution of a stereoscopic image presented by the stereoscopic imaging apparatus is all pixels, an applied electric field meets a requirement in which all pixels are used to display an image in each direction within a time period of visual persistence. A light ray of an image displayed by a pixel array is deflected to different directions, so that a resolution of the image presented in each direction is all pixels of a display panel, and multiple persons can simultaneously observe a stereoscopic image presented by all the pixels of the display panel in different observation directions.

Observation directions corresponding to different projection directions may include multiple left-eye observation directions and multiple right-eye observation directions, so that multiple persons simultaneously view a stereoscopic image. In addition, according to this embodiment of the present invention, switching between a multi-person 3D display effect and a single-person 3D display effect may be further performed. For example, if an electric field is applied to one of the at least two lens layers, light rays emergent from all the pixels in the pixel array are alternately deflected to two different projection directions. Observation directions corresponding to the projection directions may include a left-eye observation direction and a right-eye observation direction, so that one person views a stereoscopic image.

According to this embodiment of the present invention, if no electric field is applied to the at least two lens layers, the display panel 110 presents a two-dimensional image.

According to this embodiment of the present invention, when the stereoscopic imaging apparatus 100 includes two lens layers, two persons can simultaneously view a stereoscopic image.

Specifically, the at least two lens layers include: a first lens layer and a second lens layer, where the first lens layer is disposed between the second lens layer and the pixel array.

The first lens layer includes: a first lens array, a first electrode layer, and a second electrode layer, where the first electrode layer and the second electrode layer are separately disposed at two sides of the first lens array, and the first lens array is configured to alternately deflect, by a first angle according to an electric field formed by an applied time-multiplexing voltage configuration between the first electrode layer and the second electrode layer, the light rays of the images displayed by the pixels in the pixel array. The second lens layer includes: a second lens array, a third electrode layer, and a fourth electrode layer, where the third electrode layer and the fourth electrode layer are separately disposed at the two sides of the first lens array, and the second lens array is configured to alternately deflect, by a second angle according to an electric field formed by an applied time-multiplexing voltage configuration between the third electrode layer and the fourth electrode layer, light rays emergent from the first lens array, so that the light rays of the images displayed by the pixels in the pixel array are projected to four different projection directions.

According to this embodiment of the present invention, the first angle is 18°, and the second angle is 5°. The first angle and the second angle may be angles based on a central line, and the central line may be a line perpendicular to the first lens layer and the second lens layer. However, values of the first angle and the second angle are not limited thereto according to this embodiment of the present invention, and the first angle and the second angle may be determined according to included angles between the two eyes of either of two observers and the central line. The included angles between the two eyes of either of the two observers and the central line may be determined according to a distance between the two observers, a horizontal distance between either of the observers and the stereoscopic imaging apparatus 100, and a distance between the two eyes of either of the observers. For example, FIG. 2 is a space principle diagram of two-person naked-eye 3D display according to an embodiment of the present invention. Two observers are symmetrically located at two sides of a central line (a horizontal dashed line shown in FIG. 2) of a stereoscopic display apparatus, and when a horizontal distance L₁ between an observer and the stereoscopic imaging apparatus 110 is 300 mm, a distance L₂ between the two observers is 50 mm, and a distance d₁ or d₂ between the two eyes of either of the two observers is 60 mm, radial widths D₁ and D₂ of the heads of the two observers are both 150 mm, included angles between the two eyes of either of the two observers and the central line may be determined. An angle deflected to the right of the central line is represented using by a positive number, an angle deflected to the left of the central line is represented by using a negative number, -θ_{R1}=θ_{L2}=23°, -θ_{L1}=θ_{R2}=13°, θ_{R1} and θ_{L2} respectively correspond to a right eye direction of the left observer and a left eye direction of the right observer, and θ_{L1} and θ_{R2} respectively correspond to a left eye direction of the left observer and a right eye direction of the right observer. The four observation directions are a sum of deflection angles of a first lens layer and a second lens layer, and it can be learned that a first angle of the first lens layer is 18°, and a second angle of the second lens layer is 5°; or a first angle of the first lens layer is 5°, and a second angle of the second lens layer is 18°.

It should be understood that, the first lens in the first lens array, the second lens in the second lens array and pixels in a pixel array may have a one-to-one correspondence, but this embodiment of the present invention is not limited thereto. For example, one first lens or one second lens may correspond to multiple pixels, or one pixel includes multiple subpixels; or multiple second lenses correspond to one first lens, or one second lens corresponds to multiple first lenses.

To enable light rays emergent from all pixels in the pixel array to be deflected to four different projection directions, time-multiplexing voltage configurations applied to the first lens layer and the second lens layer may be alternately switched.

According to this embodiment of the present invention, a switching time of the time-multiplexing voltage configuration applied to the first lens layer and a switching time of a time-multiplexing configuration applied to the second lens layer are spaced by a preset time period. In other words, at a same time, the voltage configuration is switched in only one lens layer. For example, at a first time, the voltage configuration of the first lens layer keeps unchanged, the voltage configuration is switched in the second lens layer; at a second time after the preset time period, the voltage configuration of the second lens layer keeps unchanged, and the voltage configuration of the first lens layer is switched, and so on. The voltage configurations of the first lens layer and the second lens layer are alternately switched every preset time period.

According to this embodiment of the present invention, each first lens in the first lens array corresponds to two first electrodes in the first electrode layer, a resistive film connected between the two first electrodes, and a second electrode in the second electrode layer, where the two first electrodes are configured to receive two different voltages, and the second electrode is used as a common electrode and is configured to receive a reference voltage, so that the first lens generates a function of an off-axis lens under an action of an electric field formed by the two voltages received by the two first electrodes and the reference voltage received by the second electrode, and is configured to alternately deflect, by the first angle, a light ray emergent from a pixel corresponding to the first lens. Each second lens in the second lens array corresponds to two third electrodes in the third electrode layer, a resistive film connected between the two third electrodes, and a fourth electrode in the fourth electrode layer, where the two third electrodes are configured to receive two different voltages, and the fourth electrode is used as a common electrode and is configured to receive a reference voltage, so that the second lens generates a function of an off-axis lens under an action of an electric field formed by the two voltages received by the two third electrodes and the reference voltage received by the fourth electrode, and is configured to alternately deflect, by the second angle, a light ray emergent from a first lens corresponding to the second lens.

According to this embodiment of the present invention, by adjusting a voltage received by an electrode, an electric field may be generated in a lens layer (a liquid crystal layer), so that a needed phase configuration is generated on the liquid crystal layer. Different phase configurations depend on different voltage configurations and electrode distribution. The electrode may be made of a transparent conductive material, for example, may be made of a transparent conductive material such as an indium tin oxide (Indium Tin Oxide, ITO for short). The second electrode or the fourth electrode may be a continuous ITO transparent conductive film. The two electrodes: the first electrodes or the third electrodes may be two conductive stripes made of the ITO material, are disposed along two opposite edges of each liquid crystal lens (the first lens or the second lens), and keep a preset interval with a first electrode of an adjacent liquid crystal lens. A continuous resistive film may be made of a transparent material having a particular resistivity, and is connected between the two conductive stripes, so that when the two electrodes receive different voltages, continuously changing voltage distribution is generated in the resistive film, an electric potential difference between the continuously changing voltage distribution and the reference voltage generates continuously changing electric field distribution in a liquid crystal layer covered by the resistive film, and the continuously changing electric field distribution enables liquid crystal corresponding to the resistive film to generate a function of a lens having linear phase tilt, where the lens is configured to deflect a light ray to a preset projection direction.

It should be understood that, in another embodiment of the present invention, each first lens or second lens may further correspond to a series of conductive stripes, and these conductive stripes may be distributed uniformly, or may be distributed nonuniformly, as long as an effect of a microlens or an effect of a linear phase can be generated when a voltage is received. An electric potential difference between the voltage received by each first electrode or third electrode and the reference voltage forms a corresponding electric field in the liquid crystal layer. For example, the reference voltage may be 0 V. Each first lens or second lens may further correspond to multiple first electrodes or third electrodes. For example, each lens may correspond to four first electrodes, where one of the four first electrodes is located at an edge of a pixel, and voltages received by the four first electrodes are separately V1, V2, V3, and V4. A quantity of first electrodes corresponding to each lens may be more than 4 or less than 4. A smoothing characteristic of the liquid crystal is sufficient to enable the four electrodes to generate approximately smooth phase distribution.

According to this embodiment of the present invention, the stereoscopic imaging apparatus 100 may further include: a transparent substrate, disposed between the first lens layer and the second lens layer, where the second electrode is disposed at a side of the transparent substrate close to the first lens layer, and the fourth electrode is disposed at a side of the transparent substrate close to the second lens layer.

In other words, the first lens layer and the second lens layer may share a transparent substrate whose two sides are coated with an ITO electrode. When the first angle is 18°, and the second angle is 5°, a thickness of the transparent substrate may be approximately 277 µm. Because a thickness of a transparent substrate in an existing terminal is 300 µm, in this embodiment, a lens layer is added on the basis of a single-person 3D stereoscopic imaging apparatus, and the thickness of the transparent substrate is set to 277 µm, so as to not increase a thickness of the terminal.

According to this embodiment of the present invention, each first lens and an adjacent first lens in the first lens array share a first electrode. Specifically, each first lens corresponds to two first electrodes, the first lens and an adjacent first lens share one first electrode, and triangular phase delay distribution may be generated by receiving voltages V1 and V2 by the two first electrodes. In a first time period (for example, a first image frame), the adjacent first lens separately deflects light rays emergent from adjacent pixels to two different directions (directions to the left eye and to the right eye). If V1 and V2 are exchanged in a second time period (for example, a second image frame), the triangular phase distribution exchanges, and this phase distribution enables the light ray to be deflected to a direction different from that in the previous time period (for example, the first image frame).

According to this embodiment of the present invention, a preset interval may be maintained between the second electrode corresponding to the second lens in the second lens array and a second electrode corresponding to an adjacent second lens, where the first lens and the adjacent first lens in the first lens array in different voltage configurations separately deflect light rays emergent from two adjacent pixels corresponding to the first lens and the adjacent first lens toward opposite directions by the first angle, and two second lenses corresponding to the first lens and the adjacent first lens in a same voltage configuration deflect light rays emergent from the first lens and the adjacent first lens toward a same direction by the second angle.

According to this embodiment of the present invention, in a first time period, the first lens in the first lens array deflects, according to a first voltage configuration, a light ray of a first pixel corresponding to the first lens toward a first direction by the first angle, the adjacent first lens deflects, according to a second voltage configuration, a light ray of a second pixel corresponding to the adjacent first lens toward a second direction by the first angle, a second lens corresponding to the first lens deflects, according to a third voltage configuration, the light ray of the first pixel in the first direction toward a third direction by the second angle to a first projection direction, and a second lens corresponding to the adjacent first lens deflects, according to the third voltage configuration, the light ray of the second pixel in the second direction toward the third direction by the second angle to a second projection direction, where the first direction and the second direction are opposite to each other. In a second time period, the first lens in the first lens array deflects, according to the first voltage configuration, the light ray of the first pixel corresponding to the first lens toward the first direction by the first angle, the adjacent first lens deflects, according to the second voltage configuration, the light ray of the second pixel corresponding to the adjacent first lens toward the second direction by the first angle, the second lens corresponding to the first lens deflects, according to a fourth voltage configuration, the light ray of the first pixel in the first direction toward a fourth direction by the second angle to a third projection direction, and the second lens corresponding to the adjacent first lens deflects, according to the fourth voltage configuration, the light ray of the second pixel in the second direction toward the fourth direction by the second angle to a fourth projection direction, where the fourth direction and the third direction are opposite to each other. In a third time period, the first lens in the first lens array deflects, according to the second voltage configuration, the light ray of the first pixel corresponding to the first lens toward the second direction by the first angle, the adjacent first lens deflects, according to the first voltage configuration, the light ray of the second pixel corresponding to the adjacent first lens toward the first direction by the first angle, the second lens corresponding to the first lens deflects, according to the fourth voltage configuration, the light ray of the first pixel in the second direction toward the fourth direction by the second angle to the fourth projection direction, and the second lens corresponding to the adjacent first lens deflects, according to the fourth voltage configuration, the light ray of the second pixel in the first direction toward the fourth direction by the second angle to the third projection direction. In a fourth time period, the first lens in the first lens array deflects, according to the second voltage configuration, the light ray of the first pixel corresponding to the first lens toward the second direction by the first angle, the adjacent first lens deflects, according to the first voltage configuration, the light ray of the second pixel corresponding to the adjacent first lens toward the first direction by the first angle, the second lens corresponding to the first lens deflects, according to the third voltage configuration, the light ray of the first pixel in the second direction toward the third direction by the second angle to the second projection direction, and the second lens corresponding to the adjacent first lens deflects, according to the third voltage configuration, the light ray of the second pixel in the first direction toward the third direction by the second angle to the first projection direction.

It should be understood that, when the first projection direction and the third projection direction correspond to observation directions of two eyes of an observer, and the second projection direction and the fourth projection direction correspond to observation directions of two eyes of another observer, the pixel array may display, in the first time period and the second time period, an image of a first scenario that is shot from a first shooting angle, and then is switched to display an image of the first scenario that is shot from a second shooting angle in the third time period and the fourth time period.

According to this embodiment of the present invention, the second lens and an adjacent second lens in the second lens array may also share a third electrode.

According to this embodiment of the present invention, a third lens layer may be disposed between the first lens layer and the second lens layer, and the third lens layer is configured to project a beam emergent from the first lens array onto the second lens array or project a beam within a focal length of the second lens array. That is, the third lens layer may function as an optical relay, and light rays emergent from the first lens can be imaged around a corresponding second lens or even in an optical plane of a corresponding second lens. Therefore, crosstalk of light rays emergent from the first lens layer can be reduced between adjacent second lenses in the second lens layer. In this way, each second lens receives most beams emergent from a first lens corresponding to the second lens, but does not receive or seldom receives a beam emergent from an adjacent first lens, ensuring an expected high definition 3D visual experience.

In this embodiment of the present invention, at least two lens layers are disposed, and are configured to deflect, according to applied time-multiplexing electric fields, light rays of images displayed by a pixel array to different projection directions, so that multiple persons can simultaneously view a three-dimensional stereoscopic image.

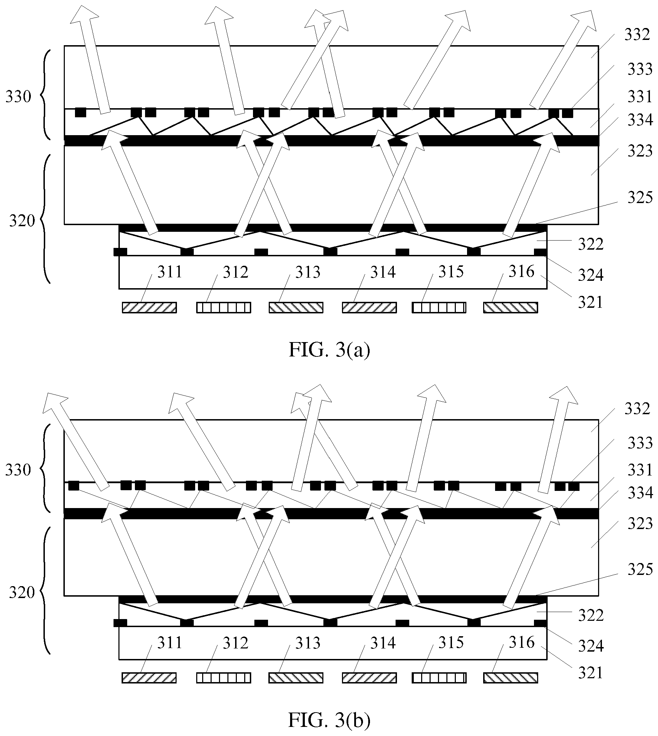

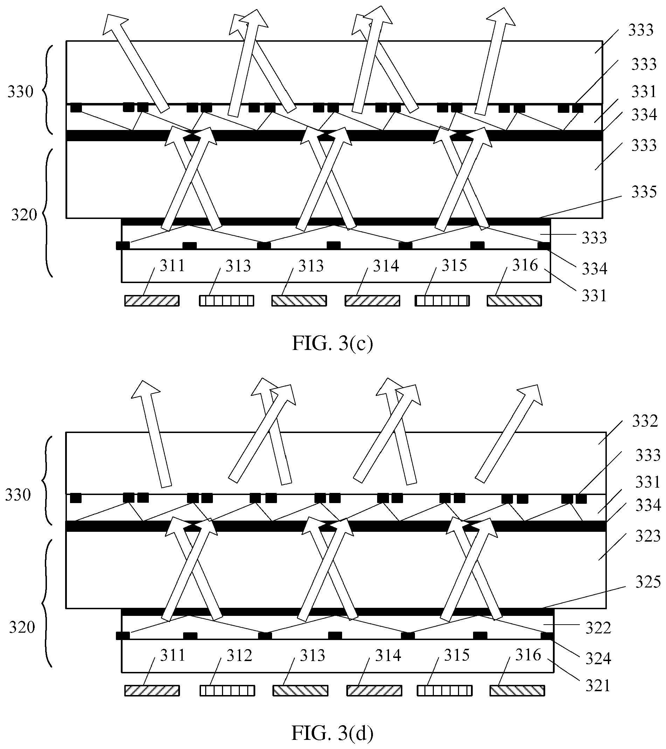

FIG. 3 is a schematic structural diagram of a stereoscopic imaging apparatus 300 according to another embodiment of the present invention. The stereoscopic imaging apparatus 300 is an example of the stereoscopic imaging apparatus 100, including: a display panel 310, a first lens layer 320, and a second lens layer 330.

In the solution of the embodiment of FIG. 3, time-multiplexing electric fields applied to two lens layers may be alternately switched every preset time period.

In this embodiment, the display panel 310 includes a pixel array, the pixel array includes pixels 311 to 316, and the pixels 311, 313, and 315 and the pixels 314, 315, and 316 may be respectively RGB pixels.

The first lens layer 320 includes: a first lens array 322, a first transparent substrate 321, and a second transparent substrate 323. The first lens array includes: a first lens, a first electrode 324, and a second electrode 325. The first lens array is a liquid crystal lens array, and the first lens is a liquid crystal lens. The first lens in the first lens array is disposed in a position one-to-one corresponding to the pixels 311 to 316. The first electrode 324 and the second electrode 325 are disposed at two sides of the first lens array (a liquid crystal layer) 322, and are configured to control the first lens to deflect light rays passing through the first lens array to different projection directions. The first electrode 324 and the second electrode 325 are disposed at two sides of the transparent substrate 321.

Adjacent first lenses in the first lens array 322 share the first electrode 324, so that the adjacent first lenses in the first lens array deflect light rays emergent from corresponding pixels toward opposite directions by a first angle (as shown in FIG. 3). Each first lens has two conductive stripes, and may generate triangular phase delay distribution by receiving voltages V1 and V2 by the two conductive stripes, as shown by a fold line in FIG. 3. For example, in a first time period, light rays of adjacent pixels are deflected to two different directions. If V1 and V2 are exchanged in a second time period, the triangular phase distribution exchanges. The phase distribution enables the light ray to be deflected to a direction different from that in a first time. In this embodiment, in the first time period, light rays of a first selected part of pixels are deflected to a left observation direction (for example, -18°), light rays of a second selected part of pixels are deflected to a right observation direction (for example, 18°), and then a voltage configuration is switched. In the following second time period, the light rays of the first selected part of the pixels are deflected to the right observation direction, and the light rays of the second selected part of the pixels are deflected to the left observation direction. Because persistence of a human visual system, it may be observed that inconsistent images in one direction at two times seem like one image.

The second lens layer 330 includes: a second lens array 331 and a second transparent substrate 332. The second lens array includes: a second lens, a third electrode 333, and a fourth electrode 334. The second lens array is a liquid crystal lens array, and the third electrode 333 and the fourth electrode 334 are disposed at two sides of the second lens array 331, and are configured to control the second lens to deflect a light ray passing through the second lens array to different projection directions. The second transparent substrate 332 may be a front panel or a touchscreen of a terminal in which the stereoscopic imaging apparatus is located. The third electrode 333 may be disposed on the front panel or the touchscreen. The fourth electrode 334 is disposed on the second transparent substrate 323 shared by the first lens layer 320 and the second lens layer 330.

The third electrode 333 may include a resistive film connected between the two conductive stripes. An electrode gap exists between third electrodes 333 of adjacent liquid crystal lenses. The two conductive stripes of each third electrode 333 receive different voltages V (for example, V = 0 and V>Vth), so that a linearly distributed voltage is formed in the resistive film. Specifically, the two conductive stripes may be ITO transparent conductive films. The voltages V = 0 and V>Vth are respectively received in the two conductive stripes. Because the resistive film has a conductivity R, a voltage of the resistive film connected between the two conductive stripes is linearly reduced. As a result, the liquid crystal presents a linear phase ramp, as shown by a fold line in FIG. 3. Each second lens in the second lens array 331 uses two third electrodes 333, and when a same voltage configuration is applied to each third electrode 333 in the second lens layer 330, light rays emergent from the first lens array 322 may be deflected toward a same direction by a second angle.

Electric fields applied to the first lens array 322 and the second lens array 331 are alternately switched in four time intervals Δt₁ to Δt₄, that is, phase characteristics of the first lens array 322 and the second lens array 331 are alternately switched, so that after passing through the first lens layer 322 and the second lens layer 331, light rays emergent from six pixels: the pixels 311 to 316 in the display panel 310 are alternately deflected to four observation directions.

For example, the first lens layer 320 may provide a deflection angle of 18° (based on a central line), the second lens layer 330 may provide a deflection angle of 5° (based on the central line), and the central line herein refers to a line perpendicular to two LC lens layers. An angle by which deflection is made to the right is represented by using a positive number, an angle by which deflection is made to the left is represented by using a negative number, and an imaging process is as follows:

As shown in FIG. 3(a), in a first time interval Δt₁, after passing through the first lens layer 320, light rays of the pixels 311, 313, and 315 are deflected by -18°, and light rays of the pixels 312, 314, 316 are deflected by 18°. After passing through the first lens layer 320, the light rays of the pixels 311 to 316 continues to be deflected by 5°, the light rays of the pixels 311, 313, and 315 are deflected to a direction of-13° (a left eye direction of a left observer), and the light rays of the pixels 312, 314, and 316 are deflected to a direction of 33° (a left eye direction of a right observer).

As shown in FIG. 3(b), in a second time interval Δt₂, the phase characteristic of the first lens layer 320 keeps unchanged, the phase characteristic of the second lens layer 330 changes, and the light rays of the pixels 311 to 316 are deflected by -5°. After pasting through the first lens layer 320, the light rays of the pixels 311, 313, and 315 are deflected by -18°, and the light rays of the pixels 312, 314, and 316 are deflected by 18°. After passing through the first lens layer 310, the light rays of the pixels 311 to 316 continues to be deflected by -5°, the light rays of the pixels 311, 313, and 315 are deflected to a direction of -23° (a right eye direction of the left observer), and the light rays of the pixels 312, 314, and 316 are deflected to a direction of 13° (a right eye direction of the right observer).

As shown in FIG. 3(c), in a third time interval Δt₃, the phase characteristic of the second lens layer 330 keeps unchanged, the phase characteristic of the first lens layer 330 changes. After pasting through the first lens layer 330, the light rays of the pixels 311, 313, and 315 are deflected by 18°, and the light rays of the pixels 313, 314, and 316 are deflected by -18°. After passing through the second lens layer 330, the light rays of the pixels 311 to 316 continues to be deflected by -5°. Finally, the light rays of the pixels 311, 313, and 315 are deflected to a direction of 13° (the right eye direction of the right observer), and the light rays of the pixels 312, 314, and 316 are deflected to a direction of -33° (the right eye direction of the left observer).

As shown in FIG. 3(d), in a fourth time interval Δt₄, the phase characteristic of the first lens layer 320 keeps unchanged, the phase characteristic of the second lens layer 330 changes, and the light rays of the pixels 311 to 316 are deflected by 5°. After pasting through the first lens layer 320, the light rays of the pixels 311, 313, and 315 are deflected by 18°, and the light rays of the pixels 312, 314, and 316 are deflected by -18°. After passing through the second lens layer 330, the light rays of the pixels 311 to 316 continues to be deflected by 5°. Finally, the light rays of the pixels 311, 313, and 315 are deflected to a direction of 23° (the left eye direction of the right observer), and the light rays of the pixels 312, 314, and 316 are deflected to a direction of -13° (the left eye direction of the left observer).

To present a stereoscopic image in the eyes of the observers, for example, in Δt₁, an image obtained by shooting from a first shooting angle may be presented by the pixels 311, 313, and 315 for the left eye of the left observer, the image obtained by shooting from the first shooting angle may be presented by the pixels 312, 314, and 316 for the left eye of the right observer. In Δt₂, an image obtained by shooting from a second shooting angle is presented by the pixels 311, 313, and 315 for the right eye of the left observer, and the image obtained by shooting from the second shooting angle is presented by the pixels 312, 314, and 316 for the right eye of the right observer. In Δt₃, the image obtained by shooting from the second shooting angle is presented by the pixels 312, 314, and 316 for the right eye of the left observer, and the image obtained by shooting from the second shooting angle is presented by the pixels 311, 313, and 315 for the right eye of the right observer. In Δt₄, the image obtained by shooting from the first shooting angle is presented by the pixels 312, 314, and 316 for the left eye of the left observer, and the image obtained by shooting from the first shooting angle is presented by the pixels 311, 313, and 315 for the left eye of the right observer.

The two eyes of either of the two observers finally view all subpixels 311 to 316 in the four time intervals Δt₁ to Δt₄ (that is, a view period). As shown in Table 1, Table 1 shows a distribution situation of pixels that are separately viewed by the eyes of the two observers in the time periods Δt₁ to Δt₄, where L1 represents the left eye of the left observer, R1 represents the right eye of the left observer, L2 represents the left eye of the right observer, and R2 represents the right eye of the right observer. A sum of the four time intervals Δt₁ to Δt₄ is less than a time period of visual persistence of human eyes.

**Table 1**

| **Time** | **L1** | | | **R1** | | | **L2** | | | **R2** | | |
|---|---|---|---|---|---|---|---|---|---|---|---|---|
| Δt₁ | 311 | 313 | 315 | | | | 312 | 314 | 316 | | | |
| Δt₂ | | | | 311 | 313 | 315 | | | | 312 | 314 | 316 |
| Δt₃ | | | | 312 | 314 | 316 | | | | 311 | 313 | 315 |
| Δt₄ | 312 | 314 | 316 | | | | 311 | 313 | 315 | | | |

It can be seen from Table 1 that, because light rays emergent from adjacent liquid crystal lens in the first lens array are deflected to opposite directions, at the same time, all pixels in the display panel 310 are deflected to two directions, the eyes at the same side of the observers may view an image displayed by half of the pixels in the display panel 310.

It should be understood that, this embodiment of the present invention, a phase switching manner of the first lens layer 320 and the second lens layer 330 is not limited, the switching manner described above may be used, or another switching manner may be used. For example, in Δt₂, the phase characteristic of the second lens layer 330 keeps unchanged, and the phase characteristic of the first lens layer 320 changes; in Δt₃, the phase characteristic of the first lens layer 320 keeps unchanged, and the phase characteristic of the second lens layer 330 changes.

It should be further understood that, the solution in which the time-multiplexing electric fields applied to the at least two lens layers may be synchronously switched every preset time period is similar to the solution in FIG. 3, and details are not described herein again. Different from the solution in FIG. 3, in the synchronous switching solution, after every preset time period, the electric fields applied to the first lens layer 320 and the second lens layer 330 are simultaneously switched, and an imaging process of the first lens layer 320 and the second lens layer 330 may be executed according to a sequence of FIG. 3a, FIG. 3c, FIG. 3b, and FIG. 3d in FIG. 3. For example, as shown in FIG. 3(a), in the first time interval Δt₁, the light rays of the pixels 311, 313, and 315 are deflected to the direction of -13° (the left eye direction of the left observer), the light rays of the pixels 312, 314, and 316 are deflected to the direction of 33° (the left eye direction of the right observer). As shown in FIG. 3(c), in the second time interval Δt₂, the phase characteristics of the first lens layer 330 and the second lens layer 330 are both changed, the light rays of the pixels 311, 313, and 315 are deflected to the direction of 13° (the right eye direction of the right observer), and the light rays of the pixels 312, 314, and 316 are deflected to the direction of -33° (the right eye direction of the left observer). As shown in FIG. 3(b), in the third time interval Δt₃, the phase characteristics of the first lens layer 320 and the second lens layer 330 are both changed, the light rays of the pixels 311, 313, and 315 are deflected to the direction of -23° (the right eye direction of the left observer), and the light rays of the pixels 312, 314, and 316 are deflected to the direction of 13° (the right eye direction of the right observer). As shown in FIG. 3(d), in the fourth time interval Δt₄, the phase characteristics of the first lens layer 320 and the second lens layer 330 are both changed, the light rays of the pixels 311, 313, and 315 are deflected to the direction of 23° (the left eye direction of the right observer), and the light rays of the pixels 312, 314, and 316 are deflected to the direction of -13° (the left eye direction of the left observer). In this way, the two eyes of either of the two observers finally view all subpixels 311 to 316 in the four time intervals Δt₁ to Δt₄ (that is, a view period), so as to present a stereoscopic image in the two eyes of either of the two observers.

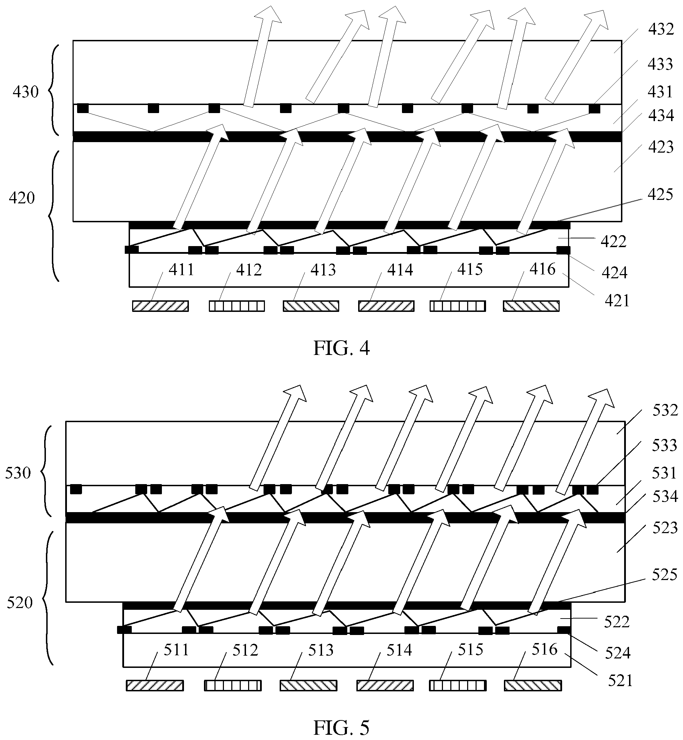

FIG. 4 is a schematic structural diagram of a stereoscopic imaging apparatus 400 according to another embodiment of the present invention. The stereoscopic imaging apparatus 400 is an example of the stereoscopic imaging apparatus 100, and includes: a display panel 410, a first lens layer 420, and a second lens layer 430 that are similar to the display panel 310, the first lens layer 320, and the second lens layer 330 shown in FIG. 3, and details are not described herein again.

Each liquid crystal lens in the first lens array 422 uses two first electrodes 424, and an electrode gap exists between first electrodes 424 of adjacent first lenses, so that each first lens in the first lens array 422 deflects a light ray emergent from a corresponding pixel toward a same direction by a first angle. Adjacent second lenses in a second lens array 431 share a third electrode 433, so that the two adjacent second lenses in the second lens array deflect light rays of two corresponding first lenses toward opposite directions by a second angle.

In four time intervals Δt₁ to Δt₄, phase characteristics of the first lens array 422 and the second lens array 431 are alternately switched, so that after passing through the first lens layer 422 and the second lens layer 431, light rays emergent from six pixels: pixels 411 to 416 in the display panel 410 are alternately deflected to four observation directions. An imaging process is similar to the process of the embodiment shown in FIG. 3, and for purpose of brevity, details are not described herein again.

Because the light rays emergent from all the first lenses in the first lens array 422 are deflected toward the same direction by the first angle, and the light rays emergent from the adjacent second lenses in the second lens array 431 are deflected toward the opposite directions by the second angle, it may be known that, in any one of the time periods Δt₁ to Δt₄, each half of the pixels in the pixel array separately enter two eyes. For example, when the first angle is 18°, and the second angle is 5°, in any one of the time periods Δt₁ to Δt₄, each half of the pixels in the pixel array separately enter two eyes of an observer.

FIG. 5 is a schematic structural diagram of a stereoscopic imaging apparatus 500 according to another embodiment of the present invention. The stereoscopic imaging apparatus 500 is an example of the stereoscopic imaging apparatus 100, and includes: a display panel 510, a first lens layer 520, and a second lens layer 530 that are similar to the display panel 210, the first lens layer 220, and the second lens layer 250 shown in FIG. 2, and details are not described herein again.

Each first lens in a first lens array 522 in the first lens layer 520 uses two first electrodes 524, and an electrode gap exists between first electrode 524 of adjacent first lenses, so that each first lens in the first lens array 522 deflects a light ray emergent from a corresponding pixel toward a same direction by a first angle.

Each second lens in a second lens array 531 in the second lens layer 530 uses two third electrodes 534, so that each second lens in the second lens array 531 deflects a light ray emergent from a corresponding first lens toward a same direction by a second angle.

In four time intervals Δt₁ to Δt₄, phase characteristics of the first lens array 522 and the second lens array 531 are alternately switched, so that after passing through the first lens layer 522 and the second lens layer 531, light rays emergent from six pixels: pixels 511 to 516 in the display panel 510 are alternately deflected to four observation directions. An imaging process is similar to the process of the embodiment shown in FIG. 3, and for purpose of brevity, details are not described herein again.

Because the light ray emergent from each first lens in the first lens array 522 is deflected toward the same direction by the first angle, and the light ray emergent from each second lens in the second lens array 431 is deflected toward the same direction by the second angle, it may be known that, in any one of the time periods Δt₁ to Δt₄, light rays of all pixels in the pixel array enter one eye of an observer. That is, at the same time, the eye of the observer may view an image displayed by all pixels in a display screen.

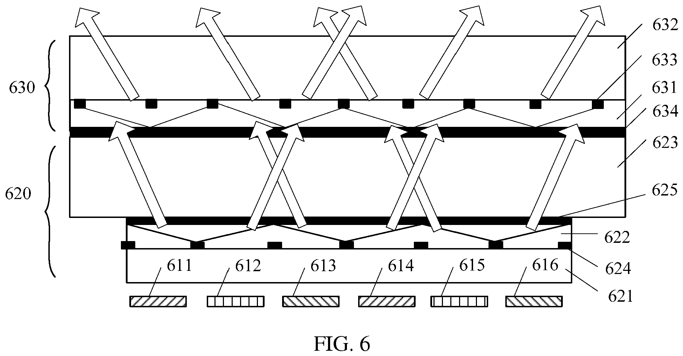

FIG. 6 is a schematic structural diagram of a stereoscopic imaging apparatus 600 according to another embodiment of the present invention. The stereoscopic imaging apparatus 600 is an example of the stereoscopic imaging apparatus 100, and includes: a display panel 610, a first lens layer 620, and a second lens layer 630 that are similar to the display panel 210, the first lens layer 220, and the second lens layer 230 shown in FIG. 2, and details are not described herein again.

Two adjacent first lenses in a first lens array 622 in the first lens layer 620 use a same first electrode 624, so that the two adjacent first lenses deflect light rays emergent from two corresponding pixels toward opposite directions by a first angle.

Two adjacent second lenses in a second lens array 631 in the second lens layer 630 use a same third electrode 633, so that the two adjacent second lenses deflect light rays emergent from two corresponding first lenses toward opposite directions by a second angle.

In four time intervals Δt₁ to Δt₄, phase characteristics of the first lens array 622 and the second lens array 631 are alternately switched, so that after passing through the first lens layer 620 and the second lens layer 630, light rays emergent from six pixels: pixels 611 to 616 in the display panel 610 are alternately deflected to four observation directions. An imaging process is similar to the process of the embodiment shown in FIG. 3, and for purpose of brevity, details are not described herein again.

In this embodiment of the present invention, because the first lens layer 620 and the second lens layer 630 both deflect light rays of adjacent pixels toward opposite directions, regardless of how phase characteristics of lens layers are alternately changed, at a same time, light rays emergent from each half of the pixels in the display panel 610 are deflected to two different directions, that is, at a same time, one eye of either of two observers may view an image displayed by half of the pixels in a display screen.

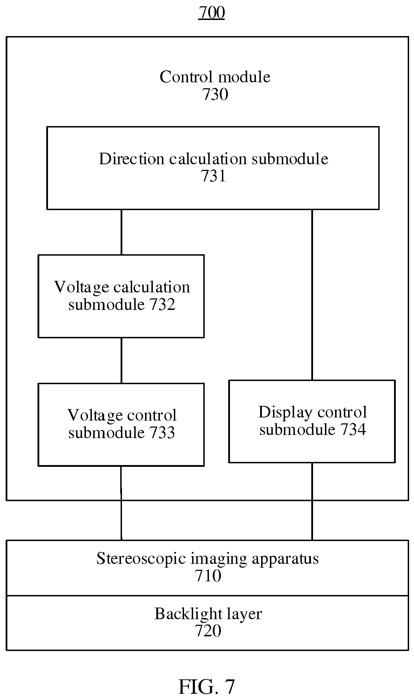

FIG. 7 is a schematic structural diagram of a display 700 according to an embodiment of the present invention. The display 700 includes: a stereoscopic imaging apparatus 710, a backlight layer 720, and a control module 730. The backlight layer 720 is overlapped with at least two lens layers of the stereoscopic imaging apparatus, and configured to emit backlight. The stereoscopic imaging apparatus 710 may be the stereoscopic imaging apparatus of the foregoing embodiment. The control module 730 is configured to control a display panel of the stereoscopic imaging apparatus to display different images in a time-division manner, and control, according to applied time-multiplexing electric fields, the at least two lens layers of the stereoscopic imaging apparatus to alternately deflect light rays of the images displayed by the display panel to different projection directions.

According to this embodiment of the present invention, the control module 730 includes: a direction calculation submodule 731, a voltage calculation submodule 732, a voltage control submodule 733, and a display control submodule 734.

Switching of content of stereoscopic display (for example, 3D display) needs to keep synchronous with switching of a lens array. The content of the stereoscopic display may be same content in a different format stored in a local device, or may be same content in a different format stored in cloud. The direction calculation submodule 731 is configured to calculate, according to information fed back by a sensor, a projection direction of an image, that is, calculate, according to an information feedback, a projection direction (or a projection angle) of displayed content. For example, the direction calculation submodule 631 may receive the following information feedbacks: 1) an information feedback of human eye tracking, for example, position information of human eyes, 2) an information feedback of a gyroscope, and 3) an information feedback of another sensor, for example, an acceleration sensor, or a temperature sensor. The direction calculation submodule 731 may provide a calculation result of the projection direction of the content to the voltage calculation submodule 732. The voltage calculation submodule 732 is configured to calculate, according to the projection direction, a voltage configuration corresponding to the projection direction, that is, may obtain a corresponding voltage configuration according to a calculation result of the projection direction of the displayed content. For example, a needed voltage sequence pattern of an electrode is obtained through calculation or table lookup, and the voltage configuration (or the voltage sequence pattern) is input to the voltage control submodule 733 to control magnitudes of voltages (for example, V1, V2, V3, and V4) received by multiple electrodes, so as to control a phase characteristic of a lens array (for example, electrically tunable liquid crystal) in a lens layer. The voltage control submodule 733 is configured to control, according to the voltage configuration, a time-multiplexing electric field applied to the lens array in the stereoscopic imaging apparatus, to control the lens array of the stereoscopic imaging apparatus to alternately deflect the light rays of the images to different projection directions. The display control submodule 734 is configured to control, according to the projection direction, the display panel of the stereoscopic imaging apparatus to display the image.

According to different terminal devices in which the stereoscopic imaging apparatus is located, the sensor may include microsensors such as a head tracking sensor, an eye tracking sensor, a viewpoint tracking sensor, a gyroscope, and a gravity accelerator.

A terminal is provided according to another embodiment of the present invention, including: the stereoscopic imaging apparatus of the embodiments in FIG. 1 and FIG. 6, or the display of the embodiment in FIG. 7.

According to the terminal of this embodiment of the present invention, multiple persons can simultaneously view a three-dimensional stereoscopic image.

The stereoscopic imaging apparatus, the display, and the terminal of the embodiments of the present invention are described above. A stereoscopic imaging method according to an embodiment of the present invention is described below.

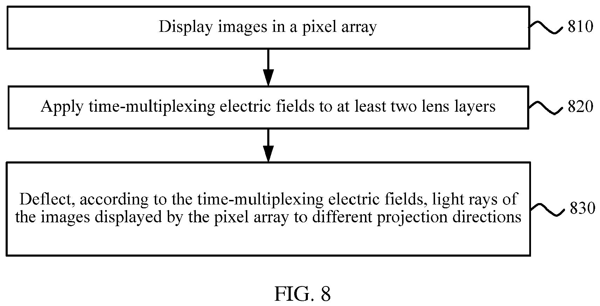

FIG. 8 is a schematic flowchart of a stereoscopic imaging method 800 according to an embodiment of the present invention. The stereoscopic imaging method 800 is applied to the stereoscopic imaging apparatus of the foregoing embodiments of the present invention. The stereoscopic imaging method in FIG. 8 includes the following content.

810: Display images in a pixel array.

820: Apply time-multiplexing electric fields to at least two lens layers.

830: Deflect, according to the time-multiplexing electric fields, light rays of the images displayed by the pixel array to different projection directions.

In this embodiment of the present invention, the time-multiplexing electric fields are applied to the at least two lens layers, and light rays emergent from the pixel array are deflected to different projection directions according to the applied time-multiplexing electric fields, so that multiple persons can simultaneously view a three-dimensional stereoscopic image.

According to this embodiment of the present invention, in 820, the time-multiplexing electric fields applied to the at least two lens layers may be alternately switched every preset time period.

According to this embodiment of the present invention, in 820, the time-multiplexing electric fields applied to the at least two lens layers may be synchronously switched every preset time period.

According to this embodiment of the present invention, in 810, images obtained by shooting from two shooting angles may be displayed in the pixel array in the time-division manner, to present a stereoscopic image in every two projection directions.

According to this embodiment of the present invention, the at least two lens layers are N lens layers, and the light rays of the images displayed by all pixels in the pixel array are alternately deflected to 2^{N} different projection directions within 2^{N} preset time periods according to the time-multiplexing electric fields, where N is a positive integer greater than 1.

According to this embodiment of the present invention, the at least two lens layers include a first lens layer and a second lens layer. In 820, a time-multiplexing voltage configuration may be received between a first electrode layer and a second electrode layer in the first lens layer to form an electric field, and the light rays of the images displayed by the pixels in the pixel array are alternately deflected by a first angle; a time-multiplexing voltage configuration is received between a third electrode layer and a fourth electrode layer in the second lens layer to form an electric field, and lights rays emergent from a first lens array in the first lens layer are alternately deflected by a second angle, so that the light rays of the images displayed by the pixels in the pixel array are projected to four different projection directions.

According to this embodiment of the present invention, in 820, two first electrodes that correspond to each first lens in the first lens array in the first lens layer and that are connected to a resistive film receive two different voltages, and a second electrode corresponding to the first lens receives a reference voltage, so that the first lens generates a function of an off-axis lens under an action of an electric field formed by the two voltages received by the two first electrodes and the reference voltage received by the second electrode, and is configured to alternately deflect, by the first angle, a light ray emergent from a pixel corresponding to the first lens. Two third electrodes that correspond to each second lens in a second lens array in the second lens layer and that are connected to a resistive film receive two different voltages, and a fourth electrode corresponding to the second lens receives a reference voltage, so that the second lens generates a function of an off-axis lens under an action of an electric field formed by the two voltages received by the two third electrodes and the reference voltage received by the fourth electrode, and is configured to alternately deflect, by the second angle, a light ray emergent from a first lens corresponding to the second lens.

According to this embodiment of the present invention, in 830, in a first time period, the first lens in the first lens array deflects, according to a first voltage configuration, a light ray of a first pixel corresponding to the first lens toward a first direction by the first angle, an adjacent first lens deflects, according to a second voltage configuration, a light ray of a second pixel corresponding to the adjacent first lens toward a second direction by the first angle, the second lens corresponding to the first lens deflects, according to a third voltage configuration, the light ray of the first pixel in the first direction toward a third direction by the second angle to a first projection direction, and a second lens corresponding to the adjacent first lens deflects, according to the third voltage configuration, the light ray of the second pixel in the second direction toward the third direction by the second angle to a second projection direction, where the first voltage configuration is different from the second voltage configuration, and the first direction and the second direction are opposite to each other. In a second time period, the first lens in the first lens array deflects, according to the first voltage configuration, the light ray of the first pixel toward the first direction by the first angle, the adjacent first lens deflects, according to the second voltage configuration, the light ray of the second pixel toward the second direction by the first angle, the second lens corresponding to the first lens deflects, according to a fourth voltage configuration, the light ray of the first pixel in the first direction toward a fourth direction by the second angle to a third projection direction, and the second lens corresponding to the adjacent first lens deflects, according to the fourth voltage configuration, the light ray of the second pixel in the second direction toward the fourth direction by the second angle to a fourth projection direction, where the fourth voltage configuration is different from the third voltage configuration, and the fourth direction and the third direction are opposite to each other. In a third time period, the first lens in the first lens array deflects, according to the second voltage configuration, the light ray of the first pixel toward the second direction by the first angle, the adjacent first lens deflects, according to the first voltage configuration, the light ray of the second pixel toward the first direction by the first angle, the second lens corresponding to the first lens deflects, according to the fourth voltage configuration, the light ray of the first pixel in the second direction toward the fourth direction by the second angle to the fourth projection direction, and the second lens corresponding to the adjacent first lens deflects, according to the fourth voltage configuration, the light ray of the second pixel in the first direction toward the fourth direction by the second angle to the third projection direction. In a fourth time period, the first lens in the first lens array deflects, according to the second voltage configuration, the light ray of the first pixel toward the second direction by the first angle, the adjacent first lens deflects, according to the first voltage configuration, the light ray of the second pixel toward the first direction by the first angle, the second lens corresponding to the first lens deflects, according to the third voltage configuration, the light ray of the first pixel in the second direction toward the third direction by the second angle to the second projection direction, and the second lens corresponding to the adjacent first lens deflects, according to the third voltage configuration, the light ray of the second pixel in the first direction toward the third direction by the second angle to the first projection direction.

In this embodiment of the present invention, the time-multiplexing electric fields are applied to the at least two lens layers, and the light rays of the images displayed by the pixel array are deflected to different projection directions according to the applied time-multiplexing electric fields, so that multiple persons can simultaneously view a three-dimensional stereoscopic image.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A stereoscopic imaging apparatus, comprising:
a display panel, comprising a pixel array and configured to display images; and
a lens component, comprising at least two lens layers, wherein the at least two lens layers are disposed in an overlapping manner in a position corresponding to the pixel array, and are configured to deflect, according to applied time-multiplexing electric fields, light rays of the images that are displayed by the pixel array and that pass through the lens component to different projection directions.

2. The stereoscopic imaging apparatus according to claim 1, wherein the time-multiplexing electric fields applied to the at least two lens layers are alternately switched every preset time period.

3. The stereoscopic imaging apparatus according to claim 1, wherein the time-multiplexing electric fields applied to the at least two lens layers are synchronously switched every preset time period.

4. The stereoscopic imaging apparatus according to any one of claims 1 to 3, wherein the pixel array is specifically configured to display, in a time-division manner, images obtained by shooting from two shooting angles, to present a stereoscopic image in every two projection directions.

5. The stereoscopic imaging apparatus according to any one of claims 1 to 4, wherein the at least two lens layers are N lens layers, and the N lens layers are configured to alternately deflect, according to the applied time-multiplexing electric fields, the light rays of the images displayed by all pixels in the pixel array to 2^{N} different projection directions within 2^{N} preset time periods, wherein N is a positive integer greater than 1.

6. The stereoscopic imaging apparatus according to any one of claims 1 to 5, wherein the at least two lens layers comprise: a first lens layer and a second lens layer, wherein the first lens layer is disposed between the second lens layer and the pixel array;
the first lens layer comprises: a first lens array, a first electrode layer, and a second electrode layer, wherein the first electrode layer and the second electrode layer are separately disposed at two sides of the first lens array, and the first lens array is configured to alternately deflect, by a first angle according to an electric field formed by an applied time-multiplexing voltage configuration between the first electrode layer and the second electrode layer, the light rays of the images displayed by the pixels in the pixel array; and
the second lens layer comprises: a second lens array, a third electrode layer, and a fourth electrode layer, wherein the third electrode layer and the fourth electrode layer are separately disposed at two sides of the second lens array, and the second lens array is configured to alternately deflect, by a second angle according to an electric field formed by an applied time-multiplexing voltage configuration between the third electrode layer and the fourth electrode layer, light rays emergent from the first lens array, so that the light rays of the images displayed by the pixels in the pixel array are projected to four different projection directions.

7. The stereoscopic imaging apparatus according to claim 6, wherein each first lens in the first lens array corresponds to two first electrodes in the first electrode layer, a resistive film connected between the two first electrodes, and a second electrode in the second electrode layer, wherein the two first electrodes are configured to receive two different voltages, and the second electrode is used as a common electrode and is configured to receive a reference voltage, so that the first lens generates a function of an off-axis lens under an action of an electric field formed by the two voltages received by the two first electrodes and the reference voltage received by the second electrode, and is configured to alternately deflect, by the first angle, a light ray emergent from a pixel corresponding to the first lens; and
each second lens in the second lens array corresponds to two third electrodes in the third electrode layer, a resistive film connected between the two third electrodes, and a fourth electrode in the fourth electrode layer, wherein the two third electrodes are configured to receive two different voltages, and the fourth electrode is used as a common electrode and is configured to receive a reference voltage, so that the second lens generates a function of an off-axis lens under an action of an electric field formed by the two voltages received by the two third electrodes and the reference voltage received by the fourth electrode, and is configured to alternately deflect, by the second angle, a light ray emergent from a first lens corresponding to the second lens.

8. The stereoscopic imaging apparatus according to claim 7, wherein each first lens and an adjacent first lens in the first lens array share a first electrode.

9. The stereoscopic imaging apparatus according to claim 8, wherein a preset interval is maintained between a second electrode corresponding to the second lens in the second lens array and a second electrode corresponding to an adjacent second lens, wherein the first lens and the adjacent first lens in the first lens array in different voltage configurations separately deflect light rays emergent from two pixels corresponding to the first lens and the adjacent first lens toward opposite directions by the first angle, and two second lenses corresponding to the first lens and the adjacent first lens in a same voltage configuration deflect light rays emergent from the first lens and the adjacent first lens toward a same direction by the second angle.

10. The stereoscopic imaging apparatus according to claim 6, wherein in a first time period, the first lens in the first lens array deflects, according to a first voltage configuration, a light ray of a first pixel corresponding to the first lens toward a first direction by the first angle, the adjacent first lens deflects, according to a second voltage configuration, a light ray of a second pixel corresponding to the adjacent first lens toward a second direction by the first angle, a second lens corresponding to the first lens deflects, according to a third voltage configuration, the light ray of the first pixel in the first direction toward a third direction by the second angle to a first projection direction, and a second lens corresponding to the adjacent first lens deflects, according to the third voltage configuration, the light ray of the second pixel in the second direction toward the third direction by the second angle to a second projection direction, wherein the first voltage configuration is different from the second voltage configuration, and the first direction and the second direction are opposite to each other;
in a second time period, the first lens in the first lens array deflects, according to the first voltage configuration, the light ray of the first pixel toward the first direction by the first angle, the adjacent first lens deflects, according to the second voltage configuration, the light ray of the second pixel toward the second direction by the first angle, the second lens corresponding to the first lens deflects, according to a fourth voltage configuration, the light ray of the first pixel in the first direction toward a fourth direction by the second angle to a third projection direction, and the second lens corresponding to the adjacent first lens deflects, according to the fourth voltage configuration, the light ray of the second pixel in the second direction toward the fourth direction by the second angle to a fourth projection direction, wherein the fourth voltage configuration is different from the third voltage configuration, and the fourth direction and the third direction are opposite to each other;
in a third time period, the first lens in the first lens array deflects, according to the second voltage configuration, the light ray of the first pixel toward the second direction by the first angle, the adjacent first lens deflects, according to the first voltage configuration, the light ray of the second pixel toward the first direction by the first angle, the second lens corresponding to the first lens deflects, according to the fourth voltage configuration, the light ray of the first pixel in the second direction toward the fourth direction by the second angle to the fourth projection direction, and the second lens corresponding to the adjacent first lens deflects, according to the fourth voltage configuration, the light ray of the second pixel in the first direction toward the fourth direction by the second angle to the third projection direction; and
in a fourth time period, the first lens in the first lens array deflects, according to the second voltage configuration, the light ray of the first pixel toward the second direction by the first angle, the adjacent first lens deflects, according to the first voltage configuration, the light ray of the second pixel toward the first direction by the first angle, the second lens corresponding to the first lens deflects, according to the third voltage configuration, the light ray of the first pixel in the second direction toward the third direction by the second angle to the second projection direction, and the second lens corresponding to the adjacent first lens deflects, according to the third voltage configuration, the light ray of the second pixel in the first direction toward the third direction by the second angle to the first projection direction.

11. The stereoscopic imaging apparatus according to any one of claims 6 to 10, further comprising:
a transparent substrate, disposed between the first lens layer and the second lens layer, wherein the second electrode layer is disposed at a side of the transparent substrate close to the first lens layer, and the fourth electrode layer is disposed at a side of the transparent substrate close to the second lens layer.

12. The stereoscopic imaging apparatus according to any one of claims 6 to 11, wherein the first angle is 18°, and the second angle is 5°.

13. The stereoscopic imaging apparatus according to any one of claims 6 to 12, wherein the second electrode layer and the fourth electrode layer comprise a continuous indium tin oxide ITO transparent conductive film.

14. The stereoscopic imaging apparatus according to any one of claims 6 to 13, wherein the first lens and the second lens comprise liquid crystal or lithium niobate crystal.

15. The stereoscopic imaging apparatus according to any one of claims 1 to 14, wherein if an electric field is applied to one of the N lens layers, the light rays of the images displayed by all the pixels in the pixel array are alternately deflected to two different projection directions.

16. The stereoscopic imaging apparatus according to any one of claims 1 to 15, wherein if no electric field is applied to the at least two lens layers, the display panel presents a two-dimensional image.

17. A display, comprising:
the stereoscopic imaging apparatus according to any one of claims 1 to 14;
a backlight layer, overlapped with at least two lens layers of the stereoscopic imaging apparatus, and configured to emit backlight; and
a control module, configured to control a display panel of the stereoscopic imaging apparatus to display images in a time-division manner, and control, according to applied time-multiplexing electric fields, the at least two lens layers of the stereoscopic imaging apparatus to alternately deflect light rays of the images displayed by the display panel to the different projection directions.

18. The display according to claim 17, wherein the control module further comprises:
a direction calculation submodule, configure to calculate a projection direction of the image according to information fed back by a sensor;
a voltage calculation submodule, configured to calculate, according to the projection direction, a voltage configuration corresponding to the projection direction;
a display control submodule, configured to control, according to the projection direction, the display panel of the stereoscopic imaging apparatus to display images; and
a voltage control submodule, configured to control an electro-optic modulation layer of the stereoscopic imaging apparatus according to a time-multiplexing electric field applied by the voltage configuration, to control a lens layer of the stereoscopic imaging apparatus to alternately deflect light rays of the images to different projection directions.

19. The display according to claim 18, wherein the information fed back by the sensor comprises at least one of human eye position information, gyroscope information, acceleration information, or temperature information.

20. A terminal, comprising: the stereoscopic imaging apparatus according to any one of claims 1 to 16 or the display according to any one of claims 17 to 19.

21. A stereoscopic imaging method, wherein the stereoscopic imaging method is applied to the stereoscopic imaging apparatus according to any one of claims 1 to 16, and comprises:
displaying images in a pixel array;
applying time-multiplexing electric fields to at least two lens layers; and
deflecting, according to the time-multiplexing electric fields, light rays of the images displayed by the pixel array to different projection directions.

22. The stereoscopic imaging method according to claim 21, wherein the applying time-multiplexing electric fields to at least two lens layers comprises: alternately switching, every preset time period, the time-multiplexing electric fields applied to any two of the at least two lens layers.

23. The stereoscopic imaging method according to claim 22, wherein the applying time-multiplexing electric fields to at least two lens layers comprises: synchronously switching, every preset time period, the time-multiplexing electric fields applied to the at least two lens layers.

24. The method according to any one of claims 21 to 23, wherein the displaying images in a pixel array comprises: displaying, in a time-division manner, images obtained by shooting from two shooting angles in the pixel array, to present a stereoscopic image in every two projection directions.

25. The stereoscopic imaging method according to any one of claims 21 to 24, wherein the at least two lens layers are N lens layers, and the light rays of the images displayed by all pixels in the pixel array are alternately deflected to 2^{N} different projection directions within 2^{N} preset time periods according to the time-multiplexing electric fields, wherein N is a positive integer greater than 1.

26. The stereoscopic imaging method according to any one of claims 21 to 25, wherein the at least two lens layers comprise a first lens layer and a second lens layer, and the applying time-multiplexing electric fields to at least two lens layers comprises:
receiving a time-multiplexing voltage configuration between a first electrode layer and a second electrode layer in the first lens layer to form an electric field, and alternately deflecting, by a first angle, the light rays of the images displayed by the pixels in the pixel array; and
receiving a time-multiplexing voltage configuration between a third electrode layer and a fourth electrode layer in the second lens layer to form an electric field, and alternately deflecting light rays emergent from the first lens layer by a second angle, so that the light rays of the images displayed by the pixels in the pixel array are projected to four different projection directions.

27. The stereoscopic imaging method according to claim 26, wherein the receiving a time-multiplexing voltage configuration between a first electrode layer and a second electrode layer in the first lens layer to form an electric field comprises:
receiving two different voltages by two first electrodes that correspond to each first lens in the first lens array of the first lens layer and that are connected to a resistive film, and receiving a reference voltage in a second electrode corresponding to the first lens, so that the first lens generates a function of an off-axis lens under an action of an electric field formed by the two voltages received by the two first electrodes and the reference voltage received by the second electrode, and is configured to alternately deflect, by the first angle, a light ray emergent from a pixel corresponding to the first lens; and
the receiving a time-multiplexing voltage configuration between a third electrode layer and a fourth electrode layer in the second lens layer to form an electric field comprises:
receiving two different voltages by two third electrodes that correspond to each second lens in the second lens array of the second lens layer and that are connected to a resistive film, and receiving a reference voltage in a fourth electrode corresponding to the second lens, so that the second lens generates a function of an off-axis lens under an action of an electric field formed by the two voltages received by the two third electrodes and the reference voltage received by the fourth electrode, and is configured to alternately deflect, by the second angle, a light ray emergent from a first lens corresponding to the second lens.

28. The stereoscopic imaging method according to claim 27, wherein the alternately deflecting, according to the time-multiplexing electric fields, light rays of the images displayed by all the pixels in the pixel array to at least four different projection directions comprises:
in a first time period, deflecting, by the first lens in the first lens array according to a first voltage configuration, a light ray of a first pixel corresponding to the first lens toward a first direction by the first angle, deflecting, by the adjacent first lens according to a second voltage configuration, a light ray of a second pixel corresponding to the adjacent first lens toward a second direction by the first angle, deflecting, by a second lens corresponding to the first lens according to a third voltage configuration, the light ray of the first pixel in the first direction toward a third direction by the second angle to a first projection direction, and deflecting, by a second lens corresponding to the adjacent first lens according to the third voltage configuration, the light ray of the second pixel in the second direction toward the third direction by the second angle to a second projection direction, wherein the first voltage configuration is different from the second voltage configuration, and the first direction and the second direction are opposite to each other;
in a second time period, deflecting, by the first lens in the first lens array according to the first voltage configuration, the light ray of the first pixel toward the first direction by the first angle, deflecting, by the adjacent first lens according to the second voltage configuration, the light ray of the second pixel toward the second direction by the first angle, deflecting, by the second lens corresponding to the first lens according to a fourth voltage configuration, the light ray of the first pixel in the first direction toward a fourth direction by the second angle to a third projection direction, and deflecting, by the second lens corresponding to the adjacent first lens according to the fourth voltage configuration, the light ray of the second pixel in the second direction toward the fourth direction by the second angle to a fourth projection direction, wherein the fourth voltage configuration is different from the third voltage configuration, and the fourth direction and the third direction are opposite to each other;
in a third time period, deflecting, by the first lens in the first lens array according to the second voltage configuration, the light ray of the first pixel toward the second direction by the first angle, deflecting, by the adjacent first lens according to the first voltage configuration, the light ray of the second pixel toward the first direction by the first angle, deflecting, by the second lens corresponding to the first lens according to the fourth voltage configuration, the light ray of the first pixel in the second direction toward the fourth direction by the second angle to the fourth projection direction, and deflecting, by the second lens corresponding to the adjacent first lens according to the fourth voltage configuration, the light ray of the second pixel in the first direction toward the fourth direction by the second angle to the third projection direction; and
in a fourth time period, deflecting, by the first lens in the first lens array according to the second voltage configuration, the light ray of the first pixel toward the second direction by the first angle, deflecting, by the adjacent first lens according to the first voltage configuration, the light ray of the second pixel toward the first direction by the first angle, deflecting, by the second lens corresponding to the first lens according to the third voltage configuration, the light ray of the first pixel in the second direction toward the third direction by the second angle to the second projection direction, and deflecting, by the second lens corresponding to the adjacent first lens according to the third voltage configuration, the light ray of the second pixel in the first direction toward the third direction by the second angle to the first projection direction.
